# EUROPÄISCHE PATENTSCHRIFT

(11) **EP 2 223 631 B1**
(45) Veröffentlichungstag und Bekanntmachung des Hinweises auf die Patenterteilung: **04.04.2012**
(21) Anmeldenummer: 10001848.0
(22) Anmeldetag: 23.02.2010
(51) Int. Cl.: B60R 11/00, A47B 96/02, B63B 29/04

(54) **Regal, insbesondere Schiffsregal, mit mindestens einer Schlingerleiste mit insbesondere mechanischer Sicherung, und Vorrichtung zur Sicherung der Lage eines Endes einer Schlingerleiste von einem Regal, insbesondere von einem Schiffsregal**
Shelf, in particular ship shelf, with at least one fiddle rail with particularly mechanical fastening and device for securing the position of an end of a fiddle rail of a shelf, in particular a ship shelf
Etagère, notamment étagère de bateau, dotée d'au moins une baguette latérale dotée d'une sécurité mécanique spéciale et dispositif de sécurisation du lieu d'une extrémité d'une baguette latérale d'une étagère, notamment d'une étagère de bateau

(30) Priorität: 25.02.2009 DE 102009010573
(43) Veröffentlichungstag der Anmeldung: 01.09.2010
(73) Patentinhaber: Henfling, Manfred, 28279 Bremen (DE)
(72) Erfinder: Henfling, Manfred, 28279 Bremen (DE)
(74) Vertreter: Manasse, Uwe

(56) Entgegenhaltungen:
- EP-A2- 0 145 472
- DE-U1- 20 211 017
- US-A1- 2005 115 809

## Beschreibung

Die vorliegende Erfindung betrifft ein Regal, insbesondere ein Schiffsregal, mit einer Vorrichtung zur Sicherung der Lage eines Endes einer Schlingerleiste in einem an dem Regal eingehängten, eingesteckten oder eingehakten Zustand.

Schlingerleisten dienen dazu, auch bei Schrägstellung eines Regals, wie zum Beispiels eines Schiffsregals, die in den einzelnen Regalfächern befindlichen Gegenstände gegen ein Herausrutschen aus dem Regal zu sichern. Die Schlingerleisten werden zu diesem Zweck in das Regal von oben eingesteckt, eingehängt, eingehakt oder auf eine andere Weise daran befestigt. Zur Entnahme von Gegenständen können sie nach oben aus dem Regal wieder herausgenommen werden. Leider besteht unter bestimmten Gegebenheiten die Gefahr, dass die Schlingerleisten aus ihren Halterungen fallen und dann die Gegenstände verrutschen und sogar aus den Regalen herausfallen können.

DE 90 17 425 U1 offenbart ein gattungsgemäßes Schiffsregal mit aufrechten Regalpfosten und mit Schlingerleisten, gekennzeichnet durch zwei Haltearme an jeder Schlingerleiste, die mit der Schlingerleiste einen im wesentlichen U-förmigen Verbund bilden, wobei die Haltearme im Bereich ihrer freien Enden Langlöcher aufweisen und wobei sich ein Befestigungsstift für jeden Haltearm durch das Langloch zu einem Regalpfosten erstreckt, sowie durch Sperrstifte, die in der Höhe der Schlingerleisten in Riegelstellung befestigt sind.

DE 30 10 697 betrifft ein Regal für Kühlräume in Seeschiffen mit fest verankerten Profilstützen und daran mit Abstand übereinander befestigten Regalböden aus Metall mit blanker Oberfläche, gekennzeichnet durch lose eingelegte Regalböden mit im Bereich der Profilstützen nach außen vorspringenden Tragzapfen und durch Profilstützen aus Schenkelprofilen, wobei in den Schenkeln der Profilstützen eine Vielzahl einseitig offener Spitze angeordnet ist, deren geschlossenes Ende wenigstens an einer Regalseite tiefer liegt als das offene Einschubende und in die die Tragzapfen der Regalböden eingreifen.

Schließlich offenbart die DE 202 11 017 U1 einen Metallhalter für eine Metallschlingerleiste eines Schiffsregals, der zumindest im Bereich des Kontakts mit der Metallschlingerleiste mit Kunststoff überzosen ist.

Der Erfindung liegt somit die Aufgabe zugrunde, das Herausfallen einer Schlingerleiste bei Regalen, insbesondere Schiffsregalen, im Einsatz zu verhindern.

Erfindungsgemäß wird diese Aufgabe durch ein Regal gemäß Anspruch 1 gelöst.

Dabei weist das Regal ein um einen Lagerpunkt schwenkbares Schwerkraftpendel auf, das an einem vertikalen Ständer des Regals um eine horizontale Achse in einer die Schlingerleiste enthaltenden oder dazu parallelen Ebene schwenkbar gelagert ist und zwischen einer oberen stabilen Gleichgewichtslage, in der das Ende der Sohlingerleiste ungesichert ist, und einer unteren stabilen Gleichgewichtslag, in der sein unteres Ende auf die Oberseite des Endes der Sochlingorleiste drückt und das Ende sichert, schwenkbar ist.

Günstigerweise weist das Regal einen Schwerkraftpendelanschlag zum Realisieren der oberen stabilen Gleichgewichtslage auf.

Vorteilhafterweise weist es einen Schwerkraftpendelanschlag zum Realisieren der unteren stabilen Gleichgewichtslage auf.

Zweckmäßigerweise sind die beiden Schwerkraftpendelanschläge einteilig, das heißt als eine gemeinsame Einheit ausgebildet.

Gemäß einer besonderen Ausfiihrungsform der Erfindung besteht zwischen dem Lagerpunkt des Schwerkraftpendels und dem Druckpunkt auf der Schlingerleiste ein horizontaler Versatz in Längsrichtung der Schlingerleiste nach außen hin. Besagter Versatz dient dazu, über den Druckpunkt das Zurückschwenken des Schwerkraftpendels zu verhindern.

Schließlich ist zweckmäßigerweise vorgesehen, dass das Schwerkraftpendel an seinem unteren Ende mindestens ein Element aus Kunststoff aufweist, mittels dessen es an dem Druckpunkt gegen die Oberseite des Endes der Schlingerleiste drückt. Da die Schlingerleiste normalerweise aus Metall ist, wird sie durch das Element aus Kunststoff nicht beschädigt.

Der Erfindung liegt die überraschende Erkenntnis zugrunde, dass durch Verwendung eines Schwerkraftpendels eine einfache Sicherung einer Schlingerleiste möglich ist.

Weitere Merkmale und Vorteile der Erfindung ergeben sich aus den Ansprüchen und der nachfolgenden Beschreibung, in der ein Ausführungsbeispiel anhand der schematischen Zeichnungen im einzelnen erläutert wird. Dabei zeigt:
- Figur 1: eine Vorderansicht eines Schiffsregals mit Schlingerleisten und einer Vorrichtung zur Sicherung der Lage eines Endes einer Schlingerleiste gemäß einer besonderen Ausführungsform der vorliegenden Erfindung;
- Figur 2: die Detailansicht A von Figur 1; und
- Figur 3: Einzeldarstellungen der Vorrichtung zur Sicherung der Lage eines Endes einer Schlingerleiste in Vorderansicht und in Seitenansicht.

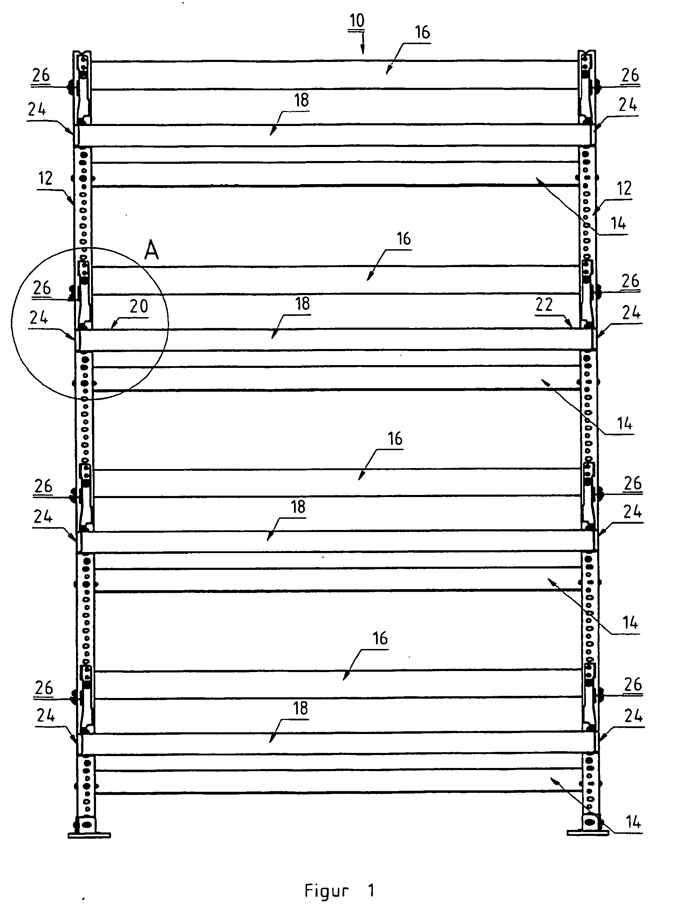

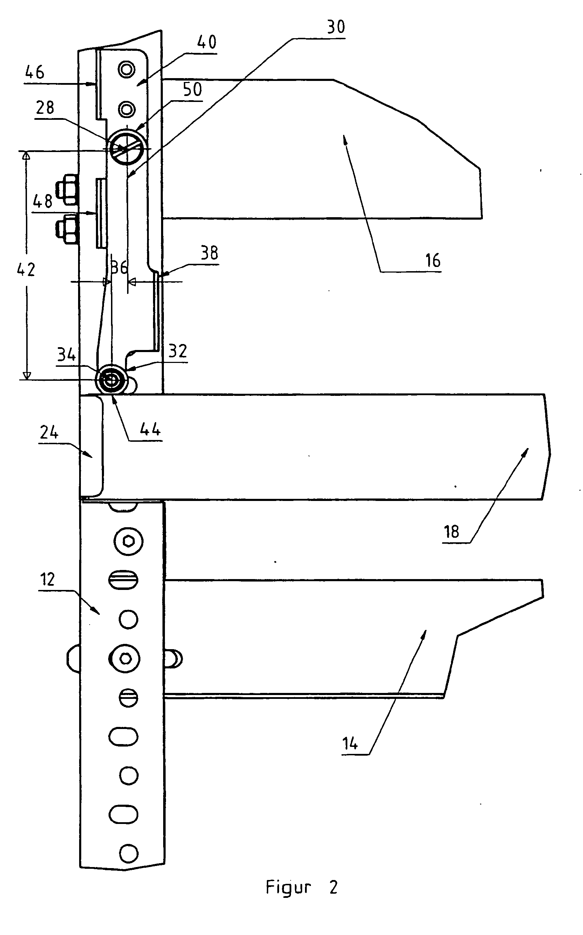

Figur 1 zeigt ein Schiffsregal 10 gemäß einer besonderen Ausführungsform der Erfindung. Das Schiffsregal 10 weist vertikale Regalständer 12 auf, zwischen denen sich Fachböden 14 horizontal erstrecken. Oberhalb jedes Fachbodens 14 erstrecken sich jeweilige Begrenzungsbleche 16 und Schlingerleisten 18 aus Metall, die an ihren jeweiligen beiden Enden 20 und 22 (wobei diese nur für eine Schlingerleiste gekennzeichnet sind) in jeweilige Metallhalter 24 eingesteckt sind. Zur Sicherung der Schlingerleisten 18 sind Vorrichtungen 26 zur Sicherung der Lage eines Endes einer Schlingerleiste vorgesehen. Einzelheiten ergeben sich aus dem in Figur 2 dargestellten Detail A.

Besagte Vorrichtung 26 zur Sicherung der Lage eines Endes (hier 20) einer Schlingerleiste (hier 18) von einem Schiffsregal (hier 10) in einem an dem Schiffsregal eingesteckten Zustand weist ein um einen Lagerpunkt 28 schwenkbares Schwerkraftpendel 30 auf, das an dem vertikalen Ständer des Regals, dass heißt Regalständer 12, um eine horizontale Achse, das heißt senkrecht zur Zeichenebene, in einer die Schlingerleiste 18 enthaltenden Ebene schwenkbar gelagert ist. Besagtes Schwerkraftpendel 30 ist z.B. aus Edelstahl und weist an seinem untere Ende zwei mit Versatz zueinander angeordnete Unterlegscheiben 32 aus Kunststoff auf, die konzentrisch zueinander angeordnet sind und deren Mittelpunkt 34 einen horizontalen Versatz 36 zum Beispiel von 8 Millimetern zum Lagerpunkt 28 aufweisen. Zudem weist das Schwerkraftpendel 30 einen Schwerpunkt (nicht gekennzeichnet) auf, der unterhalb, aber nicht unbedingt vertikal unterhalb, des Lagerpunktes 28 liegt. Weiterhin ist an dem Schwerkraftpendel 30 eine Abkantung 38 als Griff vorgesehen. Alternativ könnte das Schwerkraftpendel 30 z.B. aus Stahl (Metall), Holz oder Kunststoff und/oder ein Frästeil sein.

Darüber hinaus gehört zu besagter Vorrichtung 26 ein Schwerkraftpendelanschlag 40, der die Schwenkbewegung des Schwerkraftpendels 30 auf nahezu 180 Grad zwischen einer oberen stabilen Gleichgewichtslage (siehe Figur 1) und einer unteren stabilen Gleichgewichtslage (siehe Figur 2) beschränkt. Die obere stabile Gleichgewichtslage ergibt sich einzig und allein durch den Schwerkraftpendelanschlag 40, während sich die untere stabile Gleichgewichtslage aus einem Zusammenwirken zwischen dem Schwerkraftpendelanschlag 40 und der speziellen Gestaltung des Schwerkraftpendels 30 ergibt. Durch den Versatz 36 und eine Ausbildung des Schwerkraftpendels 30 mit einer maximalen vertikal projizierten Länge 42 vom Lagerpunkt 28 nach unten, die etwas größer als der Abstand zwischen dem Lagerpunkt 28 und der darunter befindlichen Schlingerleiste 18 ist. Der Längenunterschied kann beispielsweise circa 0,3 Millimeter betragen. Dies reicht aus, um über einen Druckpunkt 44 an dem das untere Ende des Schwerkraftpendels 30, im vorliegenden Fall die beiden Unterlegscheiben 32, auf die Oberseite des Endes 20 der Schlingerleiste 18 drückt, das Zurückschwenken des Schwerkraftpendels 30 zu verhindern.

Der Schwerkraftpendelanschlag 40 besteht im Prinzip aus zwei miteinander verbundenen Winkeln 46 und 48 und ist ebenfalls wie das Schwerkraftpendel 30 an der Vorderseite des Regalständers 12 und auch nur mit ein und derselben Schraube 50 befestigt.

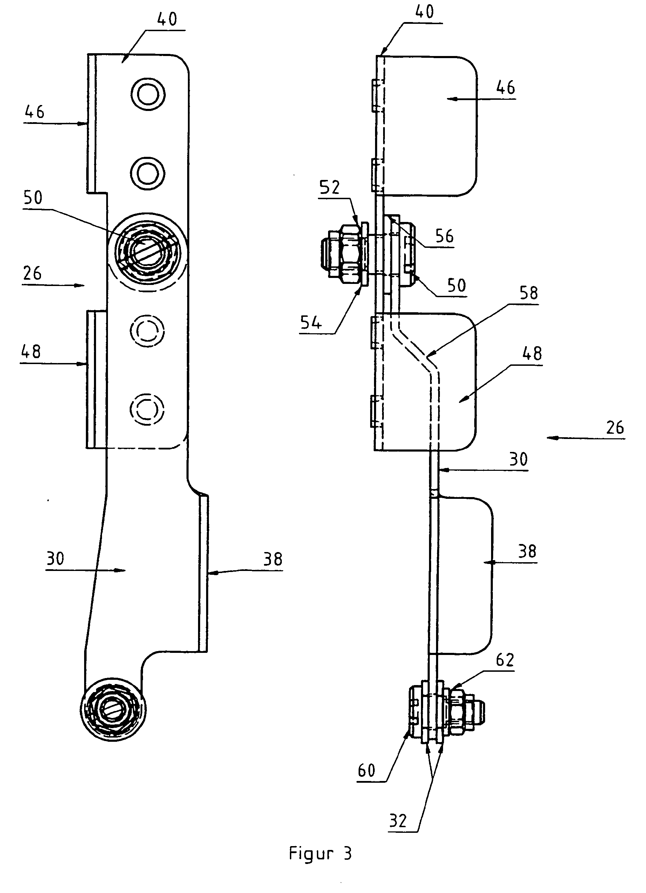

Figur 3 zeigt weitere Details besagter Vorrichtung 26. Die Schraube 50, genauer gesagt eine Flachkopfschraube, erstreckt sich durch eine obere Bohrung in dem Schwerkraftpendel 30 sowie durch den Schwerkraftpendelanschlag 40 und ist durch eine Sechskantmutter 52 unter zusätzlicher Verwendung von Unterlegscheiben 54 und 56 an einem nicht gezeigten Regalständer befestigt. Das Schwerkraftpendel 30 ist nicht eben ausgebildet, sondern weist eine Abkröpfung 58 auf. Am unteren Ende des Schwerkraftpendels 30 sind die bereits genannten Unterlegscheiben 32 mittels einer Flachkopfschraube 60 und einer Sechskantmutter 62 zu beiden Seiten des Schwerkraftpendels 30 gesichert. Besagte Unterlegscheiben 32 bilden das untere Ende des Schwerkraftpendels 30.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Regal (10), insbesondere Schiffsregal, mit mindestens einer Schlingerleiste (18),
**gekennzeichnet durch**
ein um einen Lagerpunkt (28) schwenkbares Schwerkraftpendel (30), das an einem vertikalen Ständer des Regals um eine horizontale Achse in einer die Schlingerleiste (18) enthaltenden oder dazu parallelen Ebene schwenkbar gelagert ist und zwischen einer oberen stabilen Gleichgewichtslage, in der ein Ende (20, 22) der Schlingerleiste (18) ungesichert ist, und einer unteren stabilen Gleichgewichtslage, in der sein unteres Ende auf die Oberseite des Endes (20, 22) der Schlingerleiste (18) drückt und das Ende (20) sichert, schwenkbar ist.

2. Regal (10) nach Anspruch 1, **dadurch gekennzeichnet, dass** es einen Schwerkraftpendelanschlag (40) zum Realisieren der oberen stabilen Gleichgewichtslage aufweist.

3. Regal (10) nach Anspruch 1 oder 2, **dadurch gekennzeichnet, dass** es einen Schwerkraftpendelanschlag (40) zum Realisieren der unteren stabilen Gleichgewichtslage aufweist.

4. Regal (10) nach Anspruch 2 und 3, **dadurch gekennzeichnet, dass** die beiden Schwerkraftpendelanschläge einteilig ausgebildet sind.

5. Regal (10) nach einem der vorangehenden Ansprüche, **dadurch gekennzeichnet, dass** zwischen dem Lagerpunkt (28) des Schwerkraftpendels (30) und dem Druckpunkt (44) auf der Schlingerleiste (18) ein horizontaler Versatz (36) in Längsrichtung der Schlingerleiste (18) nach außen hin besteht.

6. Regal (10) nach einem der vorangehenden Ansprüche, **dadurch gekennzeichnet, dass** das Schwerkraftpendel (30) an seinem unteren Ende (20) mindestens ein Element aus Kunststoff aufweist, mittels dessen es an dem Druckpunkt (44) auf die Oberseite des Endes (20) der Schlingerleiste (18) drückt.

## Claims

1. Shelf (10), in particular ship shelf, with at least one fiddle rail (18),
**characterised by**
a gravitational pendulum (30) pivotable about a bearing point (28), said pendulum being pivotably supported on a vertical stand of the shelf about a horizontal axis in a plane that contains the fiddle rail (18) is or parallel thereto and being pivotable between an upper stable equilibrium position in which one end (20, 22) of the fiddle rail (18) is unsecured and a lower stable equilibrium position in which its lower end presses on the upper side of the end (20, 22) of the fiddle rail (18) and secures the end (20).

2. Shelf (10) according to claim 1, **characterised in that** it has a gravitational pendulum stop (40) for implementing the upper stable equilibrium position.

3. Shelf (10) according to claim 1 or 2, **characterised in that** it has a gravitational pendulum stop (40) for implementing the lower stable equilibrium position.

4. Shelf (10) according to claim 2 and 3, **characterised in that** the two gravitational pendulum stops are designed in one piece.

5. Shelf (10) according to one of the preceding claims, **characterised in that**, between the bearing point (28) of the gravitational pendulum (30) and the pressure point (44) on the fiddle rail (18), there is a horizontal offset (36) in the longitudinal direction of the fiddle rail (18) to the outside.

6. Shelf (10) according to one of the preceding claims, **characterised in that** the gravitational pendulum (30) has, at its lower end (20), at least one element made of plastic by means of which it presses, at the pressure point (44), on the upper side of the end (20) of the fiddle rail (18).

## Revendications

1. Etagère (10), notamment étagère de bateau (10), dotée d'au moins une barre anti-roulis (18),
**caractérisée par**
un pendule de gravité (30) oscillant autour d'un point de palier (28), qui est monté contre un montant vertical de l'étagère de manière à pivoter autour d'un axe horizontal sur un plan contenant la barre anti-roulis (18) ou un plan parallèle à celle-ci et qui est oscillant entre une position d'équilibre stable supérieure où la première extrémité (20, 22) de la barre anti-roulis (18) n'est pas fixée, et une position d'équilibre stable inférieure, où son extrémité inférieure fait pression sur le sommet de l'extrémité (20, 22) de la barre anti-roulis (18) et où il fixe l'extrémité (20).

2. Etagère (10) selon la revendication 1, **caractérisée en ce qu'**elle comporte une butée de pendule de gravité (40) pour réaliser la position d'équilibre stable supérieure.

3. Etagère (10) selon la revendication 1 ou la revendication 2, **caractérisée en ce qu'**elle comporte une butée de pendule de gravité (40) pour réaliser la position d'équilibre stable inférieure.

4. Etagère (10) selon les revendications 2 et 3, **caractérisée en ce que** les deux butées de pendule de gravité sont formées d'une seule pièce.

5. Etagère (10) selon l'une des revendications précédentes, **caractérisée en ce qu'**entre le point de palier (28) du pendule de gravité (30) et le point de pression (44) sur la barre anti-roulis (18), un décalage horizontal (36) est présenté vers l'extérieur en direction longitudinale de la barre anti-roulis (18).

6. Etagère (10) selon l'une des revendications précédentes, **caractérisée en ce que** le pendule de gravité (30) à son extrémité inférieure (20) au moins un élément en matière synthétique, au moyen duquel il appuie au point de pression (44) contre le sommet de l'extrémité (20) de la barre anti-roulis (18).
